# EUROPÄISCHE PATENTANMELDUNG

(11) **EP 2 524 938 A1**
(43) Veröffentlichungstag der Anmeldung: **21.11.2012**
(21) Anmeldenummer: 12164714.3
(22) Anmeldetag: 19.04.2012
(51) Int. Cl.: C08G 65/04, C08G 65/32, C08G 65/12, C08G 65/24, C08G 65/321

(54) **Alkoxylierungsprodukte und Verfahren zu ihrer Herstellung mittels DMC-Katalysatoren**

(30) Priorität: 18.05.2011 DE 102011076019
(71) Anmelder: Evonik Goldschmidt GmbH, 45127 Essen (DE)
(72) Erfinder: Schubert, Frank, 47506 Neukirchen-Vluyn (DE); Knott, Wilfried, 45355 Essen (DE)

(57) **Zusammenfassung**

Neuartige, seitständige hydroxylgruppenhaltige oder seitständige C-C-Doppelbindungen tragende Alkoxylierungsprodukte und ein Verfahren zu ihrer Herstellung durch eine Alkoxylierungsreaktion von halogenierten Alkylenoxiden unter Einsatz von Doppelmetallcyanid (DMC)-Katalysatoren und nachfolgender Chlorabspaltung.

## Beschreibung

Die Erfindung betrifft neuartige, seitständige hydroxylgruppenhaltige oder seitständige C-C-Doppelbindungen tragende Alkoxylierungsprodukte oder entsprechende Polyether und ein Verfahren zu ihrer Herstellung durch eine Alkoxylierungsreaktion unter Einsatz von Doppelmetallcyanid (DMC)-Katalysatoren.

Die hier betrachteten neuartigen, seitständige hydroxylgruppenhaltige oder seitständige C-C-Doppelbindungen tragenden Alkoxylierungsprodukte sind insbesondere Polyetheralkohole, oft auch kurz als Polyether oder Polyetherole bezeichnet. Polyether oder Polyetherole sind seit langem bekannt und werden in großen Mengen hergestellt. Sie dienen unter Anderem durch Umsetzung mit Polyisocyanaten als Ausgangsverbindungen zur Herstellung von Polyurethanen oder aber auch zur Herstellung von Tensiden.

Typischerweise wird ein hydroxy-funktioneller Starter wie Butanol, Allylalkohol, Propylenglykol oder Glycerin in Gegenwart eines geeigneten Katalysators mit Alkylenoxiden wie Ethylenoxid, Propylenoxid oder Butylenoxid in einer Alkoxylierungsreaktion zu einem Alkoxylierungsprodukt oder Polyether umgesetzt. Die meisten Verfahren zur Herstellung solcher Alkoxylierungsprodukte bedienen sich basischer Katalysatoren wie z.B. der Alkalihydroxide und der Alkalimethylate. Besonders verbreitet ist der Einsatz von KOH. Nicht immer ist jedoch die alkalische Katalyse anwendbar, so z.B. beim Vorhandensein basenlabilerfunktioneller Gruppen in den Edukten. So ist z.B. die Alkoxylierung von Epihalohydrinen unter Einsatz von Alkalihydroxiden oderAlkalimethylaten nicht praktikabel.

Daher wurden Verfahren zur sauren Katalyse mit HBF₄ und Lewis-Säuren wie z.B. BF₃, AlCl₃ und SnCl₄ in der Alkoxylierung entwickelt; so beispielsweise in DE 10 2004 007561 (US 2007 158353) beschrieben. Nachteilig bei der säurekatalysierten Polyethersynthese ist die mangelhafte Regioselektivität bei der Ringöffnung unsymmetrischer Oxirane wie z.B. Propylenoxid und Epichlorhydrin, die dazu führt, dass in nicht zu steuernder Weise Polyoxyalkylenketten mit teils sekundären und primären OH-Termini erhalten werden. Die erreichbaren Molmassen der Polyether sind außerdem infolge von Kettenabbrüchen und Nebenreaktionen im Vergleich zu anderen Katalysatoren relativ gering.

Als Katalysatoren zur Herstellung von Polyethern werden in den letzten Jahren vermehrt Doppelmetallcyanid (DMC)-Katalysatoren eingesetzt. Die DMC-katalysierte Alkoxylierung verläuft sehr selektiv und schnell und erlaubt die Herstellung von Polyethern mit hohen Molmassen und vergleichsweise niedriger Polydispersität. Die Herstellung und Verwendung von Doppelmetallcyanid-Komplexen als Alkoxylierungskatalysatoren ist seit den 1960er Jahren bekannt und wird zum Beispiel in US 3,427,256, US 3,427,334, US 3,427,335, US 3,278,457, US 3,278,458, US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyethern nur geringe Katalysatorkonzentrationen benötigt.

Weit verbreitet sind Polyether, die ausgehend von einem OH-funktionellen Starter hergestellt werden. Die daraus gewonnenen Polyether weisen ihrerseits terminale OH-Gruppen auf. So entstehen z.B. bei Verwendung von Butanol, Hexandiol oder Glycerin Polyether mit einer, mit zwei oder mit drei kettenendständigen Hydroxylgruppen. Die OH-Funktionalität des Polyethers, die sich so zwangsläufig aus der Anzahl der OH-Gruppen des Starters ergibt, ist ein wichtiges Eigenschaftsmerkmal, das die Anwendungsmöglichkeiten jedes Polyethers bestimmt. Polyether, die in der Polyurethansynthese mit Isocyanaten vernetzt werden sollen, weisen üblicherweise zwei, drei oder mehr terminale OH-Funktionen auf. Die OH-Funktionalität bestimmt die Vernetzungsdichte und damit entscheidend die Materialeigenschaften im vernetzten Endmaterial.

In Polyethern, die als nichtionische Tenside und Emulgatoren Verwendung finden, stellen die OH-Gruppen stark hydrophile Struktureinheiten dar. Sie bilden meist das Kettenende von Polyethern, die durch Addition von z.B. Ethylenoxid an Fettalkohole gewonnen werden. Die Zahl und Anordnung der Hydroxylgruppen im Molekül bestimmt bei grenzflächenaktiven Stoffen ganz maßgeblich die hydrophil-lipophil-Bilanz.

Die technisch praktikablen Möglichkeiten, hoch OH-funktionelle Polyether zu gewinnen, insbesondere solche mit hohen Molekulargewichten, sind begrenzt. Alkoxylierungsprodukte oder Polyether weisen Molmassenverteilungen auf. Ist im Folgenden von mittleren Molmassen die Rede, so handelt es sich dabei um das Massenmittel M_{w}. So geht die Synthese von Polyethern mit vier, sechs oder mehr OH-Endgruppen von Startern wie Pentaerythrit, Sorbit, Dipentaerythrit oder z.B. Zuckern oder Zuckeralkoholen aus, welche auf Grund ihrer hohen Schmelzpunkte und ihrer schlechten Löslichkeit in inerten Lösemitteln einer Alkoxylierung schwierig zugänglich sind.

Der Stand der Technik kennt diverse Schriften, in denen durch Verwendung von Glycidol, Glycerincarbonat und Hydroxyoxetanen als Monomer bzw. als Comonomer neben anderen Alkylenoxiden polyhydroxylierte Polyether hergestellt werden. Allen diesen Verfahren gemeinsam ist, dass verzweigte Polyetherstrukturen ausgebildet werden. Häufig werden derartige Produkte als hyperverzweigte oder dendritische Polyether bezeichnet. Der Einbau von Glycidol, Glycerincarbonat (nach CO₂₋ Abspaltung) und Hydroxyoxetanen führt nach Ringöffnung zur Ausbildung einer zusätzlichen OH-Gruppe, an der bei fortschreitender Monomerzuspeisung neue OHterminierte Polyetherseitenketten aufwachsen. Jedes ins Polymer eingebaute Molekül Glycidol, Glycerincarbonat und Hydroxyoxetan stellt somit automatisch eine Verzweigungsstelle dar. Gleichzeitig fungieren die OH-funktionellen Monomere aber auch als Kettenstarter für die nachfolgend zugegebenen Monomere, so dass die Endprodukte komplexe Gemische aus unterschiedlich verzweigten Polyethern darstellen, die eine breite Molmassenverteilung aufweisen. Die OH-Funktionen sind dabei stets an den Termini der Haupt- und Seitenketten, nie jedoch seitenständig inmitten einer solchen.

Die (Co)Polymerisation von Glycidol unter alkalisch katalysierten Bedingungen zu hochverzweigten Polyetherolen für Polyurethananwendungen wird z.B. in WO 2000/037532 beschrieben. Die Herstellung von polyhydroxylierten Polyethern mit Dendrimerstruktur aus Ethylenoxid, Propylenoxid und Glycidol wird in Macromolecules (2009), 42 (19), 7292-7298 von Feng et. al. ausgeführt. Royappa et. al. untersuchen in J. Appl. Polym. Sci. (2001), 82(9), 2290-2299 die kationische Copolymerisation von Glycidol mit diversen anderen Epoxidverbindungen zu hyperverzweigten amphiphilen Polyethern. Die EP0116 978 nennt verzweigte Polyetherole mit linearen Strukturabschnitten, die durch KOH-katalysierte Reaktion von Polyethylenglykol mit Glycidol und Ethylenoxid generiert werden. Die EP 1 249 464 (US 2002 182469beschreibt Polyether auf Basis von Ethylenoxid und Glycidol, die neben Ethylenoxyeinheiten Strukturelemente des Typs [-CH₂-CH(CH₂O-)-O-] aufweisen. Die Beschreibung und die Beispiele deuten darauf hin, dass dieses Strukturmerkmal eine Verzweigungsstelle des Polyethergerüsts darstellt, es sich bei den Produkten also um hyperverzweigte Polymere handelt, bei denen die seitenständige Funktionalisierung wiederum einen Ausgangspunkt für weitergehende Alkoxylierungsschritte ist oder aber eine Alkylgruppe trägt.

In DE 10 2008 032066 (US 2011 185947) werden poly-OH-funktionelle Allylpolyether hervorgehoben, die durch alkalisch katalysierte Alkoxylierung von Glycidol oder Glycerincarbonat mit anderen Alkylenoxiden erhalten werden. Die so zugänglichen ungesättigten Polyether werden in einer Hydrosilylierungsreaktion mit Wasserstoffsiloxanen zu hoch OH-funktionellen Polysiloxan-Polyether-Copolymeren umgesetzt, welche in Beschichtungen anti-adhäsive, schmutzabweisende Wirkung zeigen.

In Bezug auf Lagerstabilität und Toxikologie deutlich im Vorteil gegenüber Glycidol ist die Verwendung von hydroxyfunktionellen Oxetanen als Monomer, um OH-Gruppen und gleichzeitig Verzweigungsstellen zu generieren. So führt die US 7,176,264 einen Prozess zur Herstellung dendritischer Polyether auf Basis von 3-Ethyl-3-hydroxymethyloxetan aus. Aus DE 10 2006 0031152 sind verzweigte polyhydroxyfunktionelle Allylpolyether bekannt, die durch Einsatz von Hydroxyoxetan in der Alkoxylierungsreaktion erhalten werden. Deren Copolymere mit Wasserstoffsiloxanen finden Eingang in polaren, zumeist wässerigen Lacksystemen.

Halogensubstituierte Polyether, die unter Verwendung von DMC-Katalysatoren und Epihalohydrinen erhalten werden, sind aus der Schrift US 7,423,112 bekannt. Die darin beschriebenen halogenierten Polyether werden in einer weiteren Umsetzung mit Aminen im Sinne einer Substitutionsreaktion zu aminfunktionellen Polyethern umgewandelt.

Nur wenige chemische Verfahren sind bislang beschrieben, die es gestatten, zusätzliche OH-Gruppen seitenständig innerhalb und nicht nur terminal in einer Polyetherkette zu erzeugen, und dabei die Ausbildung verzweigter Polymerstrukturen zu vermeiden. So beschreibt die US 3,578,719 polyhydroxylierte Tenside für kosmetische Anwendungen, die in einem zweistufigen Verfahren ausgehend von Fettalkoholstartern mit 8-22 C-Atomen dadurch gewonnen werden, dass zunächst 1-10 mol Epichlorhydrin in einer sauer katalysierten Alkoxylierungsreaktion angelagert werden, bevor im zweiten Schritt das organisch gebundene Chlor in einer Substitutionsreaktion in Gegenwart von Alkalicarboxylaten und polaren Lösemitteln in seitenständige OH-Gruppen umgewandelt werden. Die bis zu zehn Elemente des Typs [-CH₂-CH(CH₂OH)-O-] enthaltenden kurzkettigen Polyether besitzen eine zusätzliche terminale OH-Gruppe, die auf dem monofunktionellen Startalkohol basiert. Als Katalysatoren für die Polyaddition von Epichlorhydrin dienen BF₃,SnCl₄ und SbCl₅. Nachteilig ist, dass auf dem o.g. Wege nur Homopolymerisate des Epichlorhydrins sowie dessen hydroxylierte Folgeprodukte mit niedrigen Molmassen erhältlich sind. Es entsteht bezogen auf die Produktausbeute sehr viel Alkalichlorid, was als Salz schwierig abtrennbar ist. Die sehr OH-reichen Endprodukte erfordern zu ihrer Entstehung neben hohen Temperaturen von 180 °C den Einsatz polarer, protischer, hochsiedender Lösemittel wie Dipropylenglykol, um eine quantitative Chlorabstaltung zu erreichen. Das Lösemittel ist anschließend wegen seines hohen Siedepunkts destillativ schwer entfernbar. Es kann außerdem nur partiell recycliert werden, da es teilweise verestert wird.

Die GB 1267259 und GB 1516195 beschreiben die Herstellung von [-CH₂-CH(CH₂OH)-O-]-Struktureinheiten aufweisenden Polyethern als kosmetische Öle durch die Verwendung von tert.-Butylglycidylether als Monomer in einer basisch oder Lewis Säure-katalysierten Alkoxylierungsreaktion. Das Verfahren gestattet es, pro OH-Gruppe des Startalkohols bis zu zehn Einheiten tert.-Butylglycidylether blockartig zu addieren. In Gegenwart starker Säuren werden anschließend die tert.-Butylgruppen in Form von Isobutylen abgespalten und dabei die Hydroxylgruppen ausgebildet. Chemisch betrachtet stellt tert.-Butylglycidylether ein verethertes Glycidol dar. Da die OH-Gruppe so geschützt ist, werden ungewünschte Kettenverzweigungen beim Polymeraufbau verhindert. Ebenso kann das geschützte Glycidol mangels OH-Funktion nicht als Kettenstarter fungieren. Nachteilig an dem Verfahren ist die durch die unselektive Katalyse bedingte Beschränkung auf Produkte mit relativ niedrigen Molmassen und auf Strukturen mit maximal zehn [-CH₂-CH(CH₂OH)-O-]-Einheiten, die zudem ausschließlich blockartig verknüpft sind.

Neben der Hydroxyfunktionalisierung spielt die Funktionalisierung durch ungesättigte Gruppen eine wichtige Rolle. Der Fachmann kennt zahlreiche Methoden, C-C-Doppelbindungen in Polyether zu integrieren. Besonders weit verbreitet sind Allylgruppen tragende Polyether, herstellbar z.B. ausgehend von Allylalkohol, Glycerinmono- oder -diallylether oder etwa Petaerythritmono-, -di- oder -triallylether durch anschließende Alkoxylierungsreaktion. Ebenso bekannt ist die Verwendung von Allylglycidylether als Monomer in der Alkoxylierungsreaktion. Der Stand der Technik kennt darüber hinaus weitere Alkenylgruppen tragende Strukturen, die z.B. durch Alkoxylierung von Vinyloxyalkoholen oder ungesättigten Alkoholen wie Hexenol gewonnen werden. Es sind ferner Acrylat- und Methacrylat-funktionalisierte Polyether weithin bekannt und herstellbar, beispielsweise durch Veresterung OH-funktioneller Polyether mit der jeweiligen ungesättigten Säure oder durch Einsatz von Glycidyl(meth)acrylat als Monomer in der Alkoxylierung.

Die Möglichkeiten der Anwendungen ungesättigter Alkoxylierungsprodukte, wie den Polyethern, sind auf Grund ihrer Reaktivität sehr vielseitig und dem Fachmann ebenfalls bekannt. Neben der Gewinnung von Polyethersiloxanen durch Hydrosilylierungsreaktion spielt die radikalisch, ionisch oder durch Strahlung induzierte Härtung eine wichtige Rolle.

Es mangelt nach aktuellem Stand der Technik an einem Verfahren, das es gestattet, sowohl Polyether mit mehrfacher Hydroxyfunktionalität als auch mit ungesättigten Gruppen herzustellen, wobei die Zahl der entstehenden Hydroxylgruppen und der ungesättigten Gruppen im Molekül durch eine einfache Variation der Verfahrensbedingungen steuerbar ist.

Es mangelt an der Verfügbarkeit von hydroxyfunktionellen Alkoxylierungsprodukten oder Polyethern, die weder dendritischer noch hyperverzweigter Natur sind, sondern deren Struktur durch lineare Polyoxyalkylenketten mit wahlweise statistisch oder blockweise eingebauten [-CH₂-CH(CH₂OH)-O-]-Einheiten gekennzeichnet sind, sowie an einem Verfahren, das es erlaubt, derartige hydroxylierte Verbindungen reproduzierbar, mit hohen Molmassen und in einer großen strukturellen Vielfalt wirtschaftlich herzustellen, ohne dass es dabei zu den von der sauren oder alkalischen Katalyse bekannten Neben- und Kettenabbruchreaktionen in der Alkoxylierung kommt. Es mangelt ferner an ungesättigten Polyethern, die wahlweise statistisch oder blockweise in der Molekülkette verteilt Einheiten des Typs [-CH₂-C(=CH₂)-O-]- tragen, sowie an einem Verfahren zu deren Herstellung. Es mangelt ferner an Polyethern, die sowohl OH-funktionelle [-CH₂-CH(CH₂OH)-O-]-Einheiten und ungesättigte Vinylethereinheiten vom Typ [-CH₂-C(=CH₂)-O-]- in derselben Molekülkette tragen, sowie an einem Verfahren, solche doppelt funktionellen Alkoxylierungsprodukte auf einfachem, reproduzierbaren Wege herzustellen.

Somit definiert sich die zu lösende technische Aufgabe darin, neuartige funktionelle Alkoxylierungsprodukte mit linearen Polyoxyalkylenketten, die wahlweise [-CH₂-CH(CH₂OH)-O-]-Einheiten, [-CHᵣC(=CH₂)-O-]-Einheiten oder auch beide Arten dieser funktionellen Gruppen in beliebigem Verhältnis in derselben Molekülkette enthalten, sowie ein Verfahren zu deren Herstellung zu finden.

Gelöst wird diese Aufgabe durch die Umsetzung von halogenierten, Epoxidgruppen tragenden Verbindungen mit Startalkoholen unter Katalyse mit Doppelmetallcyanid (DMC)-Katalysatoren und nachfolgende Substitution oder Eliminierung des Halogens.

Überraschenderweise wurde demnach gefunden, dass derartige, seitenständige Hydroxylgruppen und/oder seitenständige Vinylgruppen tragende Alkoxylierungsprodukte in einer zweistufigen Reaktion gewonnen werden können, bei der zuerst ausgehend von einer beliebigen OH-funktionellen Startverbindung mit Hilfe der selektiven Doppelmetallcyanid (DMC)-Katalyse in einer Alkoxylierungsreaktion unter Einsatz von Epichlorhydrin als Comonomer neben weiteren Alkylenoxiden ein chloriertes Alkoxylierungsprodukt mit der Molmasse des angestrebten Zielprodukts hergestellt wird, welches im zweiten Syntheseschritt durch Verkochung mit alkalischen Hydroxiden unter Substitution von Chlor bzw. unter Dehydrochlorierung in das gewünschte, seitständig funktionalisierte, seitständig Hydroxylgruppen oder seitständig C-C-Doppelbindungen tragende Alkoxylierungsprodukt umgewandelt wird.

Gegenstand der Erfindung sind somit erfindungsgemäße Verbindungen (nachfolgend auch erfindungsgemäße Alkoxylierungsprodukte oder auch erfindungsgemäße Polyether genannt) gemäß Formel (I),

A-[O-(CH₂-CHR-O-)ₙ-(CH2-CH(CH₂OH)O-)ₘ₁-(CH₂-C(=CH₂)-O-)ₘ₂- (CH₂-CH(CH₃)-O-)ₒ-H]ₐ₁ (I)

mit R, a1, n, m1, m2 und o wie unten angegeben, die die Struktureinheit [-CH₂-CH(CH₂OH)-O-] und/oder die Struktureinheit [-CH₂-C(=CH₂)-O-] aufweisen.

Weiterer Gegenstand der Erfindung ist ein Verfahren, nach dem die Alkoxylierungsprodukte der Formel (I) erhältlich sind sowie Zusammensetzungen, die die erfindungsgemäßen Alkoxylierungsprodukte enthalten.

Das erfindungsgemäße Verfahren hat den Vorteil, dass mit diesem erstmals Verbindungen der Formel (I) erhältlich sind.

Die erfindungsgemäßen Verbindungen der Formel (I) können als chemische Vorprodukte für eine Vielzahl von möglichen chemischen Umsetzungen verwendet werden.

Die erfindungsgemäßen Alkoxylierungsprodukte und deren Herstellung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 23°C ermittelt.

Die erfindungsgemäßen Alkoxylierungsprodukte zeichnen sich dadurch aus, dass sie der Formel (I),

A-[O-(CH₂-CHR-O-)ₙ-(CH₂-CH(CH₂OH)-O-)ₘ₁-(CH₂-C(=CH₂)-O-)ₘ₂- (CH₂-CH(CH₃)-O-)ₒ-H]ₐ₁ (I)

genügen, wobei
A entweder Wasserstoff oder ein organischer Rest einer organischen Startverbindung und in diesem Falle ein mindestens ein Kohlenstoffatom aufweisender Rest ist,
R unabhängig voneinander entweder Wasserstoff, CH₂-Cl, eine Alkylgruppe mit 2-18 C-Atomen oder ein aromatischer Rest, insbesondere ein Phenylrest ist,
a1 gleich 1 bis 8, bevorzugt 1 bis 4 ist,
(a1 * m₁) gleich 0 bis 50, bevorzugt 0 bis 30, besonders bevorzugt 1 bis 20 ist
(a1 * m₂) gleich 0 bis 50, bevorzugt 1 bis 30, besonders bevorzugt 2 bis 20 ist, und die Summe aus (a1 * (m₁ + m₂)) gleich 2 bis 50, bevorzugt 2 bis 40, besonders bevorzugt 3 bis 25 ist,
   mit der Maßgabe, dass
(a1 * m₁) gleich 2 oder größer als 2 ist, wenn m₂ gleich Null ist,
(a1 * n) gleich 0 bis 200, bevorzugt 0 bis 150, besonders bevorzugt 0 bis 100 ist.
(a1 * o) gleich 1 bis 1.000, bevorzugt 5 bis 800, weiter bevorzugt 8 bis 500 und besonders bevorzugt 10 bis 400 ist.

Die mit n, m₁, m₂ und o bezeichneten Einheiten können wahlweise statistisch gemischt oder auch blockweise in der Kette enthalten sein.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Der Rest R ist vorzugsweise H, CH₂-Cl, Ethyl oder Phenyl, bevorzugt ausschließlich H. Bevorzugte Verbindungen der Formel (I) weisen insbesondere keinerlei Reste R auf, die ein Halogen enthalten.

Die erfindungsgemäßen Alkoxylierungsprodukte können in unterschiedlichem Umfang vinyl- und/oder hydroxylgruppen-funktionalisiert sein. Der molare Anteil der Einheiten mit dem Index m₂ beträgt vorzugsweise von 20 bis 100 %, bevorzugt von 30 bis 90 % bezogen auf die Summe der Einheiten mit den Indizes m₁ und m₂, die 100 % ergibt.

Die erfindungsgemäßen Verbindungen der Formel (I) weisen eine gewichtsmittlere Molmasse von 200 bis 50.000 g/mol, bevorzugt von 800 bis 35.000 g/mol und besonders bevorzugt von 1.200 bis 25.000 g/mol auf.

Die erfindungsgemäßen Alkoxylierungsprodukte der Formel (I) unterscheiden sich von den in EP 1 249 464 dargestellten Verbindungen durch das Vorhandensein von Oxypropyleneinheiten, da der Index o stets gleich eins oder größer als eins ist. Besonders solche Alkoxylierungsprodukte der Formel (I) sind bevorzugt, die als letzte Monomereinheit, die während der Alkoxylierung addiert wird, eine Oxypropylengruppe aufweisen. Die EP 1 249 464 A1 umfasst hingegen nur Alkoxylierungsprodukte, die mindestens eine Oxyethyleneinheit aufweisen, erhältlich durch die Verwendung von Ethylenoxid als Monomer oder durch den Einsatz von z.B. Ethylenglykol als Startverbindung. Die erfindungsgemäßen Produkte gemäß Formel (I) müssen nicht zwingend Ethylenoxygruppen enthalten und der Index n kann Null sein, wenn R gleich Wasserstoff ist. Darüber hinaus enthalten die mit Formel (I) definierten Alkoxylierungsprodukte im Falle m₂ = 0 mindestes zwei seitenständige OH-Funktionen in Form von mindestens zwei Einheiten des Typs [CH₂-CH(CH₂OH)-O-].

Der bevorzugt vorhandene organische Rest A ist vorzugsweise ein Rest der weiter unten beschriebenen Verbindung der Formel (II)

A-OH (II)

ohne die OH-Gruppe.

Bevorzugte Reste A sind solche, die sich aus Verbindungen der Gruppe der Alkohole, Polyetherole oder Phenole, vorzugsweise aus Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di-und Polypropylenglykol, 1,4-Butandiol, 1,6-Hexandiol, Trimethylolpropan, Glycerin, Pentaerythrit, Sorbit oder von Naturstoff basierenden, Hydroxylgruppen tragende Verbindungen, ableiten. Die Reste A weisen vorzugsweise eine Molmasse von 33 bis 4983 g/mol, insbesondere 83 bis 4983 g/mol. Es kann vorteilhaft sein, wenn die Reste A von 0 bis 7, bevorzugt von 1 bis 3 Hydroxylgruppen aufweisen.

Die Molmasse M_{w} der erfindungsgemäßen Alkoxylierungsprodukte ist über weite Bereiche variabel. Vorzugsweise beträgt die Molmasse Mw der erfindungsgemäßen Alkoxylierungsprodukte von 200 bis 50.000 g/mol, bevorzugt von 800 bis 35.000 g/mol, und besonders bevorzugt von 1200 bis 25.000 g/mol.

Die erfindungsgemäßen oder erfindungsgemäß hergestellten Alkoxylierungsprodukte der Formel (I) sind vorzugsweise farblose bis gelb-orange Produkte, die klar oder opak sein können.

Vorzugsweise werden die erfindungsgemäßen Alkoxylierungsprodukte durch das nachfolgend beschriebene erfindungsgemäße Verfahren erhalten.

In dem erfindungsgemäßen Verfahren zur Herstellung der erfindungsgemäßen Alkoxylierungsprodukte der Formel (I) sind diese mittels DMC-Katalyse unter Verwendung von Epichlorhydrin sowie anschließender Umwandlung des organisch gebundenen Chlors, in OH-Gruppen durch eine Substitutionsreaktion bzw. in Vinylethergruppen durch eine Eliminierung von HCl erhältlich.

Mit dem erfindungsgemäßen Verfahren können die ebenfalls erfindungsgemäßen Zusammensetzungen enthaltend die Alkoxylierungsprodukte der Formel (I) sowie deren Mischungen hergestellt werden.

Das erfindungsgemäße Verfahren zur Herstellung der Alkoxylierungsprodukte, insbesondere der erfindungsgemäßen Alkoxylierungsprodukte enthaltend hydroxyfunktionelle und/oder vinyletherfunktionelle Alkoxylierungsprodukte unter Einsatz von Doppelmetallcyanid-Katalysatoren, zeichnet sich dadurch aus, dass es die folgenden Verfahrensschritte umfasst:

### Verfahrensschritt 1:

### Reaktion

a) einer oder mehrerer Verbindungen der Formel

   A-OH (II)

   mit A = Wasserstoff oder organischer Rest, der mindestens ein Kohlenstoffatom aufweist, mit
b) Epichlorhydrin und Propylenoxid und optional einem oder mehreren weiteren Alkylenoxiden mit 2 bis 18 C-Atomen, vorzugsweise ausgewählt aus der Gruppe umfassend beispielsweise Ethylenoxid, 1,2-Butylenoxid und/oder Styroloxid und deren beliebigen Mischungen in Gegenwart von
c) einem Doppelmetallcyanid-Katalysator, vorzugsweise Zinkhexacyanocobaltat (III) bei einer Temperatur von 60 bis 250 °C, bevorzugt von 90 bis 160 °C und besonders bevorzugt etwa 100 bis 130 °C und einem Druck von 0,02 bar bis 100 bar, bevorzugt 0,05 bis 20 bar (absolut) zu einem Alkoxylierungsprodukt enthaltend ein oder mehrere chemisch gebundene Chloratome, bevorzugt von 2 bis 50, besonders bevorzugt von 2 bis 40, ganz besonders bevorzugt von 3 bis 25 Chloratome, und vorzugsweise einer gewichtsmittleren Molmasse von 200 bis 50000 g/mol, bevorzugt 800 bis 35000 g/mol, besonders bevorzugt 1200 bis 25000 g/mol und

### Verfahrenschritt 2:

### Reaktion

a) des in Verfahrensschritt 1) erhaltenen chlorierten Alkoxylierungsprodukts
b) mit einer oder mit mehreren Metallhydroxid- und Metallalkoholatverbindungen, bevorzugt mit Alkali- und Erdalkalimetallhydroxiden und -alkoholaten, besonders bevorzugt mit NaOH, KOH, Ca(OH)₂, NaOCH₃, KOCH₃, NaOCH₂CH₃, KOCH₂CH₃ oder deren beliebigen Mischungen
c) optional in Gegenwart von Wasser
d) optional in Gegenwart von organischen Lösemitteln, wie z. B. Dimethylsulfoxid, Ketonen wie z. B. Aceton, Methylethylketon, Methylisobutylketon, Ethern wie z. B. Tetrahydrofuran oder Alkoholen wie z. B. Methanol, Ethanol, Isopropanol, n-Propanol, Butanol, Ethylenglykol,
e) optional in Gegenwart von einem oder mehrere Phasentransferkatalysatoren wie z. B. quarternären Ammonium- oder Phosphoniumverbindungen bei einer Temperatur von 30 bis 200 °C, vorzugsweise von 60 bis 150 °C unter vollständiger oder teilweiser Abspaltung des organisch gebundenen Chlors und optional Verfahrensschritt 3:

Optionale Aufarbeitung des Reaktionsprodukts durch
a) Neutralisation mit einer anorganischen oder organischen Säure, bevorzugt mit einer Mineralsäure, besonders bevorzugt mit Phosphorsäure,
b) Destillation von Wasser und/oder Lösemittel,
c) Entfernung von Chloridsalzen durch Phasentrennung und/oder
d) Filtration.

### Verfahrensschritt 1:

Als Starter (Verfahrenschritt 1a) für die Alkoxylierungsreaktion können alle Verbindungen der Formel (II)

A-OH (II)

mit mindestens einer Hydroxylgruppe und A = Wasserstoff oder organischer Rest, der mindestens ein Kohlenstoffatom aufweist, vorzugsweise ein organischer Rest, verwendet werden. Unter Startverbindungen werden im Rahmen der vorliegenden Erfindung Substanzen verstanden, die den Anfang (Start) des herzustellenden Polyethers oderAlkoxylierungsproduktes bilden, das durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein-oder mehrwertiger Alkohol, oder deren beliebige Mischungen verwendet.

Als OH-funktionelle Startverbindungen A-OH (II) werden vorzugsweise Verbindungen mit Molmassen von 50 bis 5000 g/mol, insbesondere 100 bis 5000 g/mol eingesetzt. Als OH-funktionelle und 1 bis 8, bevorzugt 2 bis 4 Hydroxylgruppen eingesetzt. Beispielhaft seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri-und Polyethylenglykol, 1,2-Propylenglykol, Di- und Polypropylenglykol, 1,4-Butandiol, 1,6-Hexandiol, Trimethylolpropan, Glycerin, Pentaerythrit, Dipentaerythrit, Sorbit, Xylit, Threit, Erathrit, Mannit oder Lactid, Isomalt oder weitere gegebenenfalls auf Naturstoffen basierende, Hydroxylgruppen tragende Verbindungen, genannt.

Sofern im Umfang dieser Erfindung auf Naturstoffe Bezug genommen wird, z.B. Sorbit, sind grundsätzlich alle Isomeren damit gemeint, bevorzugt sind die jeweils in der Natur vorkommenden Isomere, im hier genannten Falle also das D-Sorbit.

Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Vorzugsweise werden niedermolekulare Polyetherole mit 1 bis 8 Hydroxylgruppen und gewichtsmittleren Molmassen von 100 bis 5000 g/mol, die vorzugsweise ihrerseits zuvor durch DMC-katalysierte Alkoxylierung hergestellt wurden, als Startverbindungen verwendet. Besonders geeignet sind Polypropylenglykole, Polyethylenglykole, Poly(ethylen)-co-(propylen)glykole, Polybutylenglykole, Poly(propylen)-co-(butylen)glykole, Poly(butylen)-co-(ethylen)glykole, die mindestens eine OH-Gruppe haben. Unter diesen Polyalkylenglykolen sind insbesondere solche Verbindungen vorteilhaft, die sich von Butanol, Allylalkohol, Octanol, Decanol, Dodecanol, Butandiol, Hexandiol, Glycerin ableiten. Somit können die Produkte der erfindungsgemäßen Umsetzung auch wieder als Startverbindungen im erfindungsgemäßen Verfahren eingesetzt werden, wenn höhere Molmassen erzielt werden sollen; dabei findet allerdings im Fall m₁ größer 0 eine Verzweigung statt, da alle Hydroxylgruppen alkoxyliert werden können. Zu den einsetzbaren Startern gehören auch halogenierte Verbindungen, darunter sich von Epichlorhydrin ableitende Polyetherole wie Polyepichlorhydrin. Im zweiten Reaktionsschritt mit Metallhydroxid können auch die am Starter gebundenen Halogene zu OH-Gruppen oder ungesättigten Gruppen umgewandelt werden.

Neben Verbindungen mit aliphatischen und cycloaliphatischen OH-Gruppen eignen sich als Verbindungen der Formel (II) auch beliebige Verbindungen mit 1 bis 20 phenolischen OH-Funktionen. Hierzu gehören beispielsweise Phenol, Alkyl- und Arylphenole, Bisphenol A und Novolake.

Als DMC-Katalysator können alle bekannten DMC-Katalysatoren, vorzugsweise solche, die Zink und Kobalt aufweisen, besonders bevorzugt solche, die Zinkhexacyanocobaltat(III) aufweisen, eingesetzt werden. Vorzugsweise werden die in US 5,158,922, US 2003 0119663, WO 01/80994 oder in den oben genannten Schriften beschriebenen DMC-Katalysatoren eingesetzt. Die Katalysatoren können amorph oder kristallin sein.

Im Reaktionsgemisch im Verfahrensschritt 1 liegt die Katalysatorkonzentration vorzugsweise bei > 0 bis 2.000 wppm (Massen-ppm), bevorzugt bei 30 bis 1500 wppm, bezogen auf die Gesamtmasse des Reaktionsgemisches. Vorzugsweise wird der Katalysator nur einmal in den Reaktor dosiert. Die Katalysatormenge ist vorzugsweise so einzustellen, dass eine ausreichende katalytische Aktivität für das Verfahren gegeben ist. Der Katalysator kann als Feststoff oder in Form einer Katalysatorsuspension dosiert werden.

Zur Herstellung der chlorhaltigen Alkoxylierungsprodukte als Vorprodukte für die erfindungsgemäßen hydroxyfunktionellen oder C-C-Doppelbindungs-funktionellen Alkoxylierungsprodukte wird neben Epichlorhydrin stets Propylenoxid eingesetzt. Darüber können, wie oben angegeben optional weitere Epoxidverbindungen verwendet werden, insbesondere Alkylenoxide mit 2 bis 18 C-Atomen, bevorzugt Ethylenoxid, 1,2-Butylenoxid und Styroloxid. Die einzelnen verschiedenen Monomere können entweder blockartig nacheinander oder gleichzeitig bzw. gemischt alkoxyliert werden. So resultieren im Alkoxylierungsprodukte gemäß Formel (I), in denen die mit n, m₁, m₂ und o bezeichneten Einheiten wahlweise statistisch gemischt oder auch blockweise in der Kette enthalten sind.

Das molare Verhältnis von Epichlorhydrin bezogen auf die OH-Gruppen der Startverbindungen beträgt vorzugsweise 50:1 bis 1:1, bevorzugt 40:1 bis 2:1, besonders bevorzugt 25:1 bis 3:1.

Das molare Verhältnis von Epichlorhydrin zu den übrigen Alkylenoxiden ist in weiten Grenzen variabel und beträgt vorzugsweise 1 : 1000 bis 1 : 0,1, bevorzugt 1 : 200 bis 1 : 0,5, besonders bevorzugt 1 : 100 bis 1 : 1,5.

Die mit dem Index n und o bezeichneten Struktureinheiten der Formel (I) liegen somit bevorzugt in einem molaren Überschuss bezogen auf die sich vom Epichlorhydrin ableitenden und mit Index m₁ und m₂ bezeichneten Monomereinheiten vor.

Im ersten Verfahrensschritt des erfindungsgemäßen Verfahrens wird Epichlorhydrin in Gegenwart eines DMC Katalysators vorzugsweise mit einem molaren Überschuss eines oder mehrerer Alkylenoxide copolymerisiert, wobei die statistische Copolymerisation von Vorteil ist. Bei der Copolymerisation von Epichlorhydrin mit Propylenoxid werden chlorierte Polypropylenglykole, mit Propylenoxid und Ethylenoxid chlorierte, gemischte Poly(ethylen)-co-(propylen)glykole, mit Propylenoxid und Butylenoxid chlorierte Poly(butylen)-co-(propylen)glykole erhalten.

Um die DMC katalysierte Reaktion zu starten, kann es vorteilhaft sein, den Katalysator zunächst mit einer Portion Alkylenoxid, vorzugsweise mit Propylenoxid zu aktivieren. Nach Anspringen der Alkoxylierungsreaktion kann mit der Epichlorhydrin/Alkylenoxid Copolymerisation begonnen werden. Die Addition von Epichlorhydrin/Alkylenoxid kann je nach Zielstruktur ein- oder mehrfach durch Addition von ausschließlich Alkylenoxid unterbrochen werden. Besonders bevorzugt wird, nach dem Beenden der Epichlorhydrin/Alkylenoxid Dosage weiteres Alkylenoxid, vorzugsweise Propylenoxid zu addieren.

Die Reaktion in Verfahrensschritt 1 kann z. B. zwecks Viskositätserniedrigung in einem inerten Lösemittel durchgeführt werden.

Nach Beendigung der Epoxidaddition folgt vorzugsweise eine Nachreaktion zur Vervollständigung des Umsatzes. Die Nachreaktion kann z. B. durch Weiterreaktion bei Reaktionsbedingungen ohne Zugabe von Edukten durchgeführt werden. Vorzugsweise erfolgt die Nachreaktion unter Durchmischung des Reaktionsgemisches, insbesondere unter Rühren. Der DMC-Katalysator verbleibt üblicherweise im Reaktionsgemisch bzw. in den chlorhaltigen Alkoxylierungsprodukten des Verfahrensschrittes 1. Nicht abreagierte Epoxide und eventuell weitere flüchtige Bestandteile können direkt nach Verfahrensschritt 1 oder aber nach Verfahrensschritt 2 z. B. durch Vakuumdestillation, Wasserdampf- oder Gasstrippen oder andere Methoden der Desodorierung entfernt werden.

Die chlorhaltigen Alkoxylierungsprodukte enthalten Monomereinheiten des Typs [-CH₂-CH(CH₂CL)-O-] und sind je nach Molmasse niedrig bis hoch viskos. Produkte hoher Molmasse, die reich an Einheiten sind, die aus Ethylenoxid und/oder Epichlorhydrin nach Ringöffnung chemisch eingebunden sind, neigen beim Abkühlen zur Kristallisation und sind evtl. opak. Eine quantitative Analyse auf den Chlorgehalt im Alkoxylierungsprodukt kann z.B. mit Hilfe der ¹³C NMR-Spektroskopie erfolgen. GPC-Messungen erlauben die Bestimmung der Polydispersität und mittleren Molmassen.

Als Reaktoren für die Alkoxylierung im ersten Verfahrensschritt können prinzipiell alle geeigneten Reaktortypen zum Einsatz kommen, die die Reaktion und ihre Wärmetönung beherrschen lassen. Der erste Verfahrensschritt kann in verfahrenstechnisch bekannter Art und Weise kontinuierlich, semi-kontinuierlich oder auch batchweise erfolgen. Neben Rührkesselreaktoren können auch Strahlschlaufenreaktoren mit Gasphase und externen Wärmetauschern, wie beispielsweise in EP-A-0419419 US (5,159,092) beschrieben, oder internen Wärmetauscherrohren, wie in WO 200101/062826 (US 2003 004378) beschrieben, verwendet werden. Darüber hinaus können gasphasenfreie Loop-Reaktoren eingesetzt werden.

### Verfahrensschritt 2:

Durch die Reaktion mit Metallhydroxiden im zweiten Verfahrensschritt entstehen die gewünschten funktionellen Copolymere. Die Reaktionsbedingungen, wie z.B. Temperatur, Lösemitteleinsatz und Einsatzmenge Metallhydroxid, beeinflussen das Verhältnis der mit m₁ und m₂ bezeichneten Monomereinheiten untereinander. So können wahlweise hoch hydroxyfunktionelle oder hoch C-C-Doppelbindungsfunktionelle Alkoxylierungsprodukte und/oder gemischte OH/Vinylfunktionelle Produkte erhalten werden.

Die in Verfahrensschritt 1) erhaltenen Alkoxylierungsprodukte, die chemisch gebundenes Chlor enthalten, werden nach dem erfindungsgemäßen Verfahren im zweiten Verfahrensschritt durch eine Reaktion mit einer oder mit mehreren Hydroxidverbindungen unter Abspaltung des am Kohlenstoff gebundenen Chlors und unter Entstehung der entsprechenden Chloridsalze in die erfindungsgemäßen funktionellen Alkoxylierungsprodukte oder Polyether der Formel (I) überführt.

Als Hydroxide eignen sich prinzipiell alle Metallhydroxide, bevorzugt Alkali- und Erdalkalimetallhydroxide wie NaOH, KOH oder Ca(OH)₂ sowie deren Mischungen. Die Hydroxide können wahlweise in fester Form, als wässerige Lösungen oder Dispersionen oder z.B. in Alkoholen wie Ethanol oder Methanol gelöst eingesetzt werden. Wässerige Natronlauge und Kalilauge sowie ethanolische oder methanolische Lösungen von NaOH bzw. KOH oder deren Mischungen sind besonders geeignet. Ferner eignen sich Metallalkoholate, bevorzugt Alkali- und Erdalkalialkoholate wie NaOCH₃, KOCH₃, NaOCH₂CH₃, KOCH₂CH₃ in fester Form oder auch als alkoholische Lösungen. Die Konzentration der Lösungen ist grundsätzlich frei wählbar, 10 bis 50 Gew.-%ige Lösungen sind jedoch bevorzugt. Es ist vorteilhaft, d en zweiten Verfahrensschritt unter inertem Schutzgas wie beispielsweise Stickstoff oder Argon durchzuführen.

Die Einsatzmenge des Hydroxids bzw. Alkoholats bemisst sich nach dem Chlorgehalt im Epichlorhydrin-Alkoxylierungsprodukt oder Epichlorhydrinpolyether. Für einen raschen und quantitativen Umsatz ist es vorteilhaft, das Hydroxid bzw. das Alkoholat äquimolar oder in einem molaren Überschuss bezogen auf das gebundene Chlor im Alkoxylierungsprodukt einzusetzen. So werden bezogen auf 1 mol Chlor vorzugsweise 1,0 bis 10 mol Hydroxid bzw. Alkoholat, bevorzugt 1,01 mol bis 5 mol Hydroxid bzw. Alkoholat, besonders bevorzugt 1,1 mol bis 3 mol Hydroxid bzw. Alkoholat eingesetzt.

Durch Zugabe geringerer Hydroxid- oder Alkoholatmengen oder durch vorzeitigen Abbruch der Reaktion im zweiten Verfahrensschritt lassen sich Alkoxylierungsprodukte oder Polyether gemäß Formel (I) erzeugen, in denen das Chlor nur partiell abgespalten wurde. R stellt dann teilweise ein CH₂Cl dar.

Der zweite Verfahrensschritt kann mit oder ohne Lösemittelzusatz durchgeführt werden. Geeignete Lösemittel sind insbesondere polare oder protische Verbindungen oder deren auf die Löslichkeit des Polyethers und der Mischbarkeit mit dem Hydroxid abgestimmte Mischungen. Zu den verwendbaren Lösemitteln gehören Dimethylsulfoxid, Ketone wie Aceton, Methylethylketon, Methylisobutylketon, Ether wie Tetrahydrofuran oder Alkohole wie Ethanol, Isopropanol, n-Propanol, Butanol, Ethylenglykol.

Auch die Verwendung von Wasser als Lösemittel ist im zweiten Verfahrensschritt möglich. Das Alkoxylierungsprodukt kann darin sowohl in gelöster als auch in dispergierter Form vorliegen. Der Lösemittel- bzw. Wasseranteil in der Mischung mit dem Alkoxylierungsprodukt beträgt im zweiten Verfahrensschritt vorzugsweise 5 bis 80 Gew.-%, bevorzugt 10 bis 60 Gew.-%.

Es ist möglich, bei der Durchführung des Verfahrensschrittes 2, insbesondere der Substitutions- bzw. Dehydrohalogenierungsreaktion, vorzugsweise wenn die im wässerigen Medium durchgeführt wird, Phasentransferkatalysatoren hinzuzufügen, um die Reaktion zu beschleunigen. Geeignete Phasentransferkatalysatoren sind dem Fachmann bekannt. Bevorzugte Phasentransferkatalysatoren sind z. B. quaternäre Ammonium- und Phosphoniumverbindungen.

Der zweite Verfahrensschritt kann bei Temperaturen von 30 bis 200 °C, vorzugsweise bei 60 bis 150 °C durchgeführt werden. Bei Verwendung von Lösemitteln kann die Reaktion vorzugsweise bei der Rückflusstemperatur des siedenden Lösemittels durchgeführt werden. Eine weitere Option ist, die Hydroxid- bzw. Alkoholataddition in dem Autoklaven durchzuführen, in dem zuvor die Alkoxylierung (Verfahrensschritt 1) durchgeführt wurde. Diese Variante erlaubt es, die Chlorabspaltung bei höheren Temperaturen unter Überdruck rascher durchzuführen.

Die Reihenfolge der Reaktandenzugabe ist im zweiten Verfahrensschritt beliebig. Es ist sowohl möglich, die chlorierten Alkoxylierungsprodukte im Reaktionsgefäß vorzulegen und unter Rühren das jeweilige Hydroxid bzw. Alkoholat zuzugeben, als auch umgekehrt das Hydroxid bzw. Alkoholat in einer rührfähigen, d.h. gelösten oder dispergierten Form, vorzulegen und danach den Epichlorhydrinpolyether oder das Epichlorhydrin-Alkoxylierungsprodukt hinzuzufügen. Die Zugabe des zweiten Reaktanden kann sowohl kontinuierlich im Zulaufverfahren als auch portionsweise geschehen.

Wird ein organisches Lösemittel oder Wasser verwendet, so kann dieses mit der ersten Reaktionskomponente im Reaktor vorgelegt werden. Alternativ kann das Lösemittel bzw. Wasser auch mit der zweiten Reaktionskomponente kontinuierlich oder diskontinuierlich zugeführt werden. In diesem Fall ist es günstig, den zweiten Reaktanden in gelöster Form zuzufügen. Die Zugabe des zweiten Reaktanden kann innerhalb weniger Minuten aber auch langsam innerhalb von z.B. mehreren Stunden erfolgen. Durch eine sich anschließende ausreichend lange Rührzeit (Nachreaktionszeit) ist sicherzustellen, dass die Chlorabspaltung vollständig verläuft. Die Dauer der Nachreaktion kann durch einfache Vorversuche ermittelt werden. Vorzugsweise dauert die Zugabe und Nachreaktion insgesamt ca. 2 bis 8 h.

Während der Umsetzung im Rahmen des Verfahrensschrittes 2 entsteht das Chlorid des jeweiligen Metallhydroxids bzw. Metallalkoholats. Die Metallchloride wie NaCl oder KCl sind nur teilweise im Reaktionsgemisch löslich und fallen teilweise als Feststoffe aus.

In einer bevorzugten Ausführungsform des erfindungsgemäßen Verfahrens wird der chlorierte Polyether oder das chlorierte Alkoxylierungsprodukt vorgelegt und das Metallhydroxid- bzw. Metallalkoholat über einen Zeitraum von 30 min bis 2 h unter Rühren zugegeben. Nach einer Nachreaktionszeit von ca. 4 h ist ein vollständiger Umsatz erreicht. Die Analyse auf Vinylether und auf restliches am Polyether oder Alkoxylierungsprodukt gebundenes Chlor kann mittels ¹³C-NMR-Analyse durchgeführt werden.

Als Produkt des Verfahrensschrittes 2 wird ein Reaktionsgemisch (eine Zusammensetzung) erhalten, welche(s) das Alkoxylierungsprodukt der Formel (I) aufweist.

### Optionaler Verfahrensschritt 3:

Das im Reaktionsgemisch vorhandene Lösemittel oder Wasser kann entweder schon während der Nachreaktion oder nach Beendigung der Nachreaktion destillativ, vorzugsweise im Vakuum, entfernt werden. Vorteilhaft ist es, die Destillation bei der Reaktionstemperatur des Verfahrensschrittes 2 im Vakuum durchzuführen.

Um nach beendeter Umsetzung den Hydroxidüberschuss zu neutralisieren, können prinzipiell alle Säuren verwendet werden. Vorzugsweise eignen sich wässerige Mineralsäuren, insbesondere wässerige Phosphorsäure. Es wird vorzugsweise soviel Säure zugefügt, dass sich ein annähernd neutraler pH-Wert von 6 bis 8 in dem Reaktionsgemisch einstellt. Die Neutralisation kann wahlweise vor oder nach einer ggf. durchgeführten Lösemittel- bzw. Wasserdestillation durchgeführt werden.

Es gibt mehrere Möglichkeiten, Chloridsalze aus dem Reaktionsgemisch zu entfernen. So kann das möglichst wasserfreie Reaktionsgemisch, welches das Alkoxylierungsprodukt der Formel (I) aufweist, gegebenenfalls in einem Lösemittel gelöst, durch Filtration von Salzen befreit werden.

Zuvor kann bei Bedarf eine Teilmenge Salz bereits über eine Phasentrennung entfernt werden. Dazu wird das Reaktionsgemisch, welches das Alkoxylierungsprodukt der Formel (I) aufweist, mit Wasser versetzt und gerührt, um ungelöstes Chlorid zu lösen. Die dabei entstehende Sole wird nach einer gewissen Absitzzeit von der organischen Phase abgetrennt. Die noch mit Restsalz behaftete organische Phase kann anschließend z. B. wasserfrei destilliert und anschließend filtriert werden.

Welche Art der Aufarbeitung am günstigsten ist, richtet sich jeweils nach den vorhandenen apparativen, technischen Möglichkeiten und nach den spezifischen Eigenschaften des Alkoxylierungsprodukt der Formel (1), wie seiner Hydrophilie, Dichte, Viskosität oder Löslichkeit.

Durch die Verwendung der DMC-Katalyse im ersten Verfahrensschritt bietet das erfindungsgemäße Verfahren Zugang zu hydroxylfunktionellen Alkoxylierungsprodukten oder Polyethern, die höhermolekular als die z.B. in US 3,578,719, GB 1267259 und GB 1516195 offenbarten Produkte sind, und deren [-CH₂-CH(CH₂OH)-O-] Gruppen darüber hinaus nicht einfach nur blockartig aneinandergereiht sind. So stellen die erfindungsgemäßen Produkte Polyalkylenglykole dar, in deren Polymerkette die [-CH₂-CH(CH₂OH)-O-] Einheiten neben Oxypropylen- und evtl. weiteren Oxyalkyleneinheiten eingestreut vorliegen.

Die Alkoxylierungsprodukte der Formel (I) können als Vorprodukte für eine weitere chemische Umsetzung oder direkt zur Herstellung von Zusammensetzungen, die diese Alkoxylierungsprodukte enthalten, verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Experimenteller Teil:

### GPC-Messungen:

GPC-Messungen zur Bestimmung der Polydispersität und mittleren Molmassen Mw wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Bestimmung des Gehalts an Chlor und Vinylgruppen:

Die Bestimmung des Gehalts an Chlor und Vinylgruppen erfolgte mit Hilfe der ¹³C-NMR-Spektroskopie. Verwendet wurde ein NMR Spektrometer vom Typ Bruker Avance 400. Die Proben wurden dazu in CDCl₃ gelöst.

### Bestimmung der OH-Zahl:

Hydroxylzahlen wurden nach der Methode DGF C-V 17 a (53) der Deutschen Gesellschaft für Fettwissenschaft bestimmt. Dabei wurden die Proben mit Essigsäureanhydrid in Gegenwart von Pyridin acetyliert und der Verbrauch an Essigsäureanhydrid durch Titration mit 0,5 n Kalilauge in Ethanol gegen Phenolphthalein bestimmt.

### Beispiel A:

### Herstellung von Epichlohydrin-Alkoxylierungspodukten (Vorprodukten) nach erfindungsgemäßem Verfahren

### Beispiel A1: Vorprodukt 1:

In einem 3 Liter Autoklaven wurden als Starter 360,5 g Poly(oxypropylen)monobutylether (massenmittlere Molmasse M_{w} = 385 g/mol) und 2,25 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 75 g Propylenoxid zugeführt. Nach Anspringen der Reaktion und Innendruckabfall wurden unter Kühlen zunächst weitere 200 g Propylenoxid zudosiert. Anschließend wurden unter gleichen Bedingungen 1747 g Propylenoxid und 348 g Epichlorhydrin im Gemisch innerhalb von 60 min bei 130 °C und max. 2,7 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 275 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose, niedrig viskose chlorhaltige Alkoxylierungsprodukt wurde auf unter 90 °C abgekühlt und aus dem Reaktor abgelassen. Das Produkt hatte It. GPC eine gewichstmittlere Molmasse von 3033 g/mol, eine Polydispersität M_{w}/Mₙ von 1,18 und enthielt It. ¹³C-NMR-Analyse 4 mol Cl pro Molekül.

### Beispiel A2: Vorprodukt 2:

In einem 3 Liter Autoklaven wurden als Starter 337,3 g Poly(oxypropylen)monobutylether (massenmittlere Molmasse M_{w} = 380 g/mol) und 2,25 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 70 g Propylenoxid zugeführt. Nach Anspringen der Reaktion und Innendruckabfall werden unter Kühlen zunächst weitere 189 g Propylenoxid zudosiert. Anschließend werden unter gleichen Bedingungen 1655 g Propylenoxid und 494 g Epichlorhydrin im Gemisch innerhalb von 90 min bei 130 °C und max. 2,9 bar Reaktorinnendruck zudosiert. Es schloss sich eine 30-minütige Nachreaktion bei 130 °C an. Abschließend wurden als Endblock weitere 259 g Propylenoxid bei 130 °C addiert. Nach einer erneuten Nachreaktion folgte eine Entgasungsstufe im Vakuum bei 130 °C. Das fast farblose niedrig viskose chlorhaltige Alkoxylierungsprodukt wurde auf unter 90 °C abgekühlt und aus dem Reaktor abgelassen. Das Produkt hatte lt. GPC eine gewichtsmittlere Molmasse von 3576 g/mol, eine Polydispersität M_{w}/Mₙ von 1,29 und enthielt It. ¹³C-NMR-Analyse 5,8 mol Cl pro Molekül.

### Beispiel A3: Vorprodukt 3:

In einem 3 Liter Autoklaven wurden als Starter 190 g Polypropylenglykol (massenmittlere Molmasse M_{w} = 700 g/mol) und 1,25 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 35 g Propylenoxid zugeführt. Nach Anspringen der Reaktion und Innendruckabfall wurden unter Kühlen zunächst weitere 140 g Propylenoxid zudosiert. Anschließend wurden unter gleichen Bedingungen 1312 g Propylenoxid und 152 g Epichlorhydrin im Gemisch innerhalb von 75 min bei 130 °C und max. 3 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 75 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose chlorhaltige Alkoxylierungsprodukt wurde auf unter 90 °C abgekühlt und aus dem Reaktor abgelassen. Das Produkt hatte It. GPC eine gewichtsmittlere Molmasse von 6940 g/mol, eine Polydispersität M_{w}/Mₙ von 1,21 und enthielt It. ¹³C-NMR-Analyse 6 mol Cl pro Molekül.

### Beispiel B:

### Herstellung der erfindungsgemäßen Alkoxylierungsprodukte gemäß dem erfindungsgemäßen Verfahren

### Beispiel B1:

In einem mit Rührer und Destillationsvorrichtung ausgestatteten Glaskolben wurden nach Inertisierung mit Stickstoff 300,0 g des Vorprodukts 2 vorgelegt und auf 115°C erwärmt. Innerhalb von 50 min wurden 113,0 g wässerige Kalilauge (45 Gew.-%) kontinuierlich zu getropft, während gleichzeitig Wasser unter Vakuum bei <50 mbar destillativ aus dem Reaktionsgemisch entfernt wurde. 4 h wurde die Mischung bei 115 °C unter weiterem Destillieren bei ca. 20 mbar gerührt. Es entstand eine gut rührfähige Mischung aus Alkoxylierungsprodukt und Salz. Die alkalische Reaktionsmischung wurde auf 95 °C abgekühlt und mit 30 Gew.-%iger wässeriger Phosphorsäure neutralisiert. Es wurde weiteres Wasser zugegeben, bis sich alles Salz gelöst hatte und die Mischung in einen Scheidetrichter überführt. Die untere Solephase wurde nach ausreichender Absitzzeit abgetrennt, die verbleibende Polyetherphase wieder in einen Glaskolben mit Destillationsaufsatz zurückgeführt und per Vakuumdestillation bei max. 130 °C von Restwasser befreit. Abschließend wurden ausgefallene Salzreste aus dem trüben Alkoxylierungsprodukt in der Wärme bei ca. 80 °C abfiltriert. Das Endprodukt war gelblich, leicht trübe und niedrig viskos. Gemäß ¹³C-NMR-Spektrum enthielt es im Mittel pro Molekül 4,5 Vinylgruppen und praktisch keine Reste mehr an organisch gebundenem Chlor.

### Beispiel B2:

Der im Beispiel B1 beschriebene Versuchsablauf wurde wiederholt, mit dem Unterschied, dass 250,0 g des Vorprodukts 2 mit einer reduzierten Menge von 55,4 g wässeriger Kalilauge (45 %) zur Reaktion gebracht wurden. Das Endprodukt war ebenfalls gelblich, niedrig viskos und weist gemäß ¹³C-Spektrum im Mittel pro Molekül ca. 2,8 Vinylgruppen und ca. 3 mol gebundenen Chlors auf.

### Beispiel B3:

In einem mit Rührer ausgestatteten Glaskolben wurden nach Inertisierung mit Stickstoff 751,8 g des Vorprodukts 2 vorgelegt und auf 90 °C erwärmt. Innerhalb von 90 min wurden 282,9 g wässerige Kalilauge (45 Gew.-%) kontinuierlich zugetropft. Innerhalb von 4 h wurde die Temperatur auf 119 °C erhöht und der Druck mittels Vakuumpumpe schrittweise auf 20 mbar gesenkt. Wasser wurde destillativ entfernt, es entstand eine gut rührfähige Mischung aus Alkoxylierungsprodukt und Salz. Die alkalische Reaktionsmischung wurde bei 95 °C mit 30 Gew.-%iger wässeriger Phosphorsäure neutralisiert. Es wurde weiteres Wasser zugegeben, bis sich alles Salz gelöst hatte und die Mischung in einen Scheidetrichter überführt. Die untere Solephase wurde nach Absitzen getrennt, die verbleibende Polyetherphase wieder in einen Glaskolben mit Destillationsaufsatz zurückgeführt und per Vakuumdestillation bei max. 130 °C trocken destilliert. Abschließend wurden Salzreste bei ca. 80 °C abfiltriert. Das Endprodukt war gelblich, niedrig viskos und wies gemäß ¹³C-NMR-Spektrum im Mittel pro Molekül 0,5 Vinylgruppen und praktisch keine Reste an organisch gebundenem Chlor auf. Die OH-Zahl betrug 66 mg KOH/g.

### Beispiel B4:

Der im Beispiel B3 beschriebene Versuchsablauf wurde wiederholt, mit dem Unterschied, dass 300,0 g des Vorprodukts 2 und 72,4 g wässerige Natronlauge (50 Gew.-%) eingesetzt wurden. Das Endprodukt war ebenfalls gelb, trübe, niedrig viskos und wies gemäß ¹³C-NMR-Spektrum im Mittel pro Molekül ca. 2,5 Vinylgruppen und praktisch keine Reste an gebundenem Chlor auf. Die OH-Zahl betrug 92 mg KOH/g.

### Beispiel B5:

In einem mit Rührer und Rückflusskühler ausgestatteten Glaskolben wurden nach Inertisierung mit Stickstoff 200 g des Vorprodukts 1 und 100 g Ethanol vorgelegt, gelöst und bis zur Rückflusstemperatur erwärmt. Innerhalb von 30 min wurden 62,3 g wässerige Kalilauge (45 Gew.-%) kontinuierlich zugetropft. Nach 2 h 15 min Nachreaktion wurden Ethanol und Wasser bei ansteigender Temperatur bis 120 °C abdestilliert. Die gut rührfähige alkalische Mischung wurde bei 80 °C mit 30 Gew.-%iger wässeriger Phosphorsäure neutralisiert. Es wurde weiteres Wasser zugegeben, bis sich alles Salz gelöst hatte. Im Scheidetrichter wurde die untere Solephase nach ausreichender Absitzzeit abgetrennt und die Polyetherphase in 170 g Methylisobutylketon aufgenommen. Durch Zugabe von Wasser in einer Menge ausreichend um als Feststoff vorliegendes Salz zu lösen und nochmalige Phasentrennung wurden Salzreste entfernt. Die Lösung wurde in einen Glaskolben mit Destillationsaufsatz per Vakuumdestillation bei max. 130 °C von Methylisobutylketon und Restwasser befreit. Das Alkoxylierungsprodukt wurde in der Wärme bei ca. 80 °C abfiltriert. Das Endprodukt war gelblich, niedrig viskos und wies gemäß ¹³C-NMR-Spektrum im Mittel pro Molekül 4 Vinylgruppen und keine Reste an organisch gebundenem Chlor auf.

### Beispiel B6:

In einem mit Rührer und Destillationsvorrichtung ausgestatteten Glaskolben wurden nach Inertisierung mit Stickstoff 347 g des Vorprodukts 3 vorgelegt und auf 115°C erwärmt. Innerhalb von 35 min wurden 23,1 g festes Kaliummethanolat in 4 Portionen zugefügt, während gleichzeitig Methanol unter Vakuum bei <50 mbar destillativ aus dem Reaktionsgemisch entfernt wurde. 2,5 h wurde die Mischung bei 115 °C unter weiterem Destillieren bei ca. 20 mbar gerührt. Es entstand eine gut rührfähige Mischung aus Produkt und Salz. Die alkalische Reaktionsmischung wurde auf 85 °C abgekühlt und mit 30 Gew.-%iger wässeriger Phosphorsäure neutralisiert. Es wurde weiteres Wasser zugegeben, bis sich alles Salz gelöst hatte und die Mischung in einen Scheidetrichter überführt. Die untere Solephase wurde nach ausreichender Absitzzeit abgetrennt, die verbleibende Polyetherphase wieder in einen Glaskolben mit Destillationsaufsatz zurückgeführt und per Vakuumdestillation bei max. 130 °C von Restwasser befreit. Abschließend wurden ausgefallene Salzreste aus dem trüben Alkoxylierungsprodukt in der Wärme bei ca. 80 °C abfiltriert. Das Endprodukt war gelblich und leicht trübe. Gemäß ¹³C-NMR-Spektrum enthielt es im Mittel pro Molekül 5,8 Vinylgruppen und praktisch keine Reste mehr an organisch gebundenem Chlor.

## Patentansprüche

1. Verbindungen, die das Strukturelement [-CH₂-CH(CH₂OH)-O-] und/oder das Strukturelement [-CH₂-C(=CH₂)-O-] aufweisen, **dadurch gekennzeichnet, dass** sie der Formel (I) genügen
A-[O-(CH₂-CHR-O-)ₙ-(CH₂-CH(CH₂OH)-O-)ₘ₁-(CH₂-C(=CH₂)-O-)ₘ₂- (C₂-CH(CH₃)-O-)ₒ-H]ₐ₁ (I)
wobei
a1 gleich 1 bis 8, bevorzugt 1 bis 4 ist,
A entweder Wasserstoff oder ein Rest einer organischen Startverbindung und in diesem Falle ein mindestens ein Kohlenstoffatom aufweisender Rest ist,
R unabhängig voneinander entweder Wasserstoff, CH₂-Cl, eine Alkylgruppe mit 2-18 C-Atomen oder ein aromatischer Rest ist,
(a1 * m₁) gleich 0 bis 50 ist
(a1 * m₂) gleich 0 bis 50 ist,
(a1 * n) gleich 0 bis 200 ist,
(a1 * o) gleich 1 bis 1.000 ist
und die Summe aus (a1 * (m₁ und m₂)) gleich 2 bis 50 ist,
mit der Maßgabe, dass
(a1 * m₁) gleich 2 oder größer als 2 ist, wenn (a1 * m₂) gleich Null ist.

2. Verbindungen gemäß Anspruch 1, **dadurch gekennzeichnet, dass** der molare Anteil der Einheiten mit dem Index m₂ von 20 bis 100 % bezogen auf die Summe der Einheiten mit den Indizes m₁ und M₂, die 100 % ergibt, beträgt.

3. Verbindungen gemäß Anspruch 2, **dadurch gekennzeichnet, dass** der molare Anteil der Einheiten mit dem Index m₂ von 30 bis 90 % bezogen auf die Summe der Einheiten mit den Indizes m₁ und m₂, die 100 % ergibt, beträgt.

4. Verbindungen gemäß zumindest einem der Ansprüche 1 bis 3, **dadurch gekennzeichnet, dass** die Verbindungen der Formel (I) als letzte Monomereinheit eine Oxypropylengruppe (Index o) aufweisen.

5. Verbindungen gemäß zumindest einem der Ansprüche 1 bis 4, **dadurch gekennzeichnet, dass** der Rest A ein Rest eines ein- oder mehrwertigen Polyetheralkohols und/oder ein Rest eines ein- oder mehrwertigen Alkohols ist.

6. Verbindungen gemäß zumindest einem der Ansprüche 1 bis 5, **dadurch gekennzeichnet, dass** sie eine gewichtsmittlere Molmasse von 200 bis 50000 g/mol aufweisen.

7. Verfahren zur Herstellung von Verbindungen enthaltend das Strukturelement [-CH₂-CH(CH₂OH)-O-] und/oder das Strukturelement [-CH₂-C(=CH₂)-O-], unter Einsatz von Doppelmetallcyanid-Katalysatoren umfassend die Verfahrensschritte,
Verfahrenschritt 1)
Reaktion
a) einer oder mehrerer Verbindungen der Formel
A-OH (II)
mit A = Wasserstoff oder organischer Rest, der mindestens ein Kohlenstoffatom aufweist, mit
b) Epichlorhydrin und Propylenoxid und optional einem oder mehreren weiteren Alkylenoxiden mit 2 bis 18 C-Atomen in Gegenwart von
c) einem Doppelmetallcyanid-Katalysator
bei einer Temperatur von 60 bis 250 °C und einem Druck von 0,02 bar bis 100 bar (absolut) zu einem Alkoxylierungsprodukt mit einem oder mehreren chemisch gebundenen Chloratomen
und
Verfahrensschritt 2)
Reaktion
a) des in Verfahrensschritt 1) erhaltenen chlorierten Alkoxylierungsprodukts,
b) mit einer oder mit mehreren Metallhydroxid- oder Metallalkoholat verbindungen,
c) optional in Gegenwart von Wasser,
d) optional in Gegenwart von organischen Lösemitteln,
e) optional in Gegenwart von Phasentransferkatalysatoren,
bei einer Temperatur von 30-200 °C unter vollständiger oder teilweiser Abspaltung des organisch gebundenen Chlors und
optional Verfahrensschritt 3)
Aufarbeitung des Reaktionsprodukts durch
a) Neutralisation mit einer anorganischen oder organischen Säure, bevorzugt mit einer Mineralsäure, besonders bevorzugt mit Phosphorsäure,
b) Destillation von Wasser und/oder Lösemittel,
c) Entfernung von Chloridsalzen durch Phasentrennung und/oder
d) Filtration.

8. Verfahren gemäß Anspruch 7, **dadurch gekennzeichnet, dass** als Metallhydroxid Natronlauge und/oder Kalilauge sowie ethanolische oder methanolische Lösungen von NaOH bzw. KOH oder deren Mischungen und/oder als Metallalkoholat Natriummethanolat und/oder Kaliummethanolat oder deren methanolische Lösungen oder Mischungen eingesetzt werden.

9. Verfahren gemäß Anspruch 8, **dadurch gekennzeichnet, dass** 10 bis 50 Gew.-%ige Lösungen an Natronlauge, Kalilauge, Natruimmethanolat und/oder Kaliummethanolat oder deren Mischungen verwendet werden.

10. Verfahren gemäß zumindest einem der Ansprüche 7 bis 9, **dadurch gekennzeichnet, dass** das Hydroxid und/oder Alkoholat äquimolar oder in einem molaren Überschuss bezogen auf das gebundene Chlor im Alkoxylierungsprodukt eingesetzt wird.

11. Verfahren nach Anspruch 10, **dadurch gekennzeichnet, dass** bezogen auf 1 mol Chlor 1,0 mol bis 3 mol Hydroxid oder Alkoholat eingesetzt werden.

12. Verfahren nach einem der Ansprüche 7 bis 11, **dadurch gekennzeichnet, dass** eine Verbindung gemäß einem der Ansprüche 1 bis 6 hergestellt wird.

13. Verfahren nach einem der Ansprüche 7 bis 12, **dadurch gekennzeichnet, dass** eine Zusammensetzung gemäß Anspruch 14 erhalten wird.

14. Zusammensetzung enthaltend eine Verbindung gemäß einem der Ansprüche 1 bis 6.
